# FASCICULE DE BREVET EUROPEEN

(11) **EP 1 127 772 B1**
(45) Date de publication et mention de la délivrance du brevet: **09.07.2003**
(21) Numéro de dépôt: 01400422.0
(22) Date de dépôt: 19.02.2001
(51) Int. Cl.: B62D 1/19

(54) **Dispositif de guidage linéaire d'une colonne de direction**
Lineare Lenksäulenführungseinrichtung
Steering column linear guiding device

(30) Priorité: 24.02.2000 FR 0002484
(43) Date de publication de la demande: 29.08.2001
(73) Titulaire: NACAM France S.A., F-41100 Vendôme (FR)
(72) Inventeur: Badaire, Philippe, 41800 Montoire (FR); Duval, Benoît, 41100 Vendôme (FR); Laisement, André, 41290 La Chapelle Encherie (FR); Paillard, Benoît, 41100 Vendôme (FR)
(74) Mandataire: Chassagnon, Jean-Alain

(56) Documents cités:
- EP-A- 1 018 463
- PATENT ABSTRACTS OF JAPAN vol. 1995, no. 08, 29 septembre 1995 (1995-09-29) -& JP 07 117685 A (FUJI KIKO CO LTD), 9 mai 1995 (1995-05-09)

## Description

La présente invention se rapporte à un dispositif de guidage linéaire pour une colonne de direction de véhicule automobile, comme révélé dans JP-A-07117685 et correspondant au préambule de la revendication 1.

Le dispositif selon l'invention s'applique notamment à une colonne de direction réglable en profondeur ou en inclinaison ou bien à une colonne de direction réglable en profondeur et en inclinaison, dont l'arbre de direction est monté dans un tube-corps, qui est supporté et bloqué sur la carrosserie à la position voulue. La colonne de direction comprend un arbre de direction monté tournant dans un tube-corps, qui est relié à un ensemble support fixé au châssis du véhicule ou à un élément de la carrosserie. L'invention peut s'appliquer également à une colonne de direction non réglable ; dans ce cas, le tube-corps est monté directement dans l'ensemble support.

L'amélioration croissante de la sécurité sur les colonnes de direction demande aux constructeurs de maîtriser tous les paramètres des systèmes d'absorption d'énergie. Ainsi, en ce qui concerne le procédé d'absorption d'énergie notamment au moyen de déroulement d'un fil, qui est de plus en plus sollicité sur les colonnes de direction, il faut éviter que, lors du choc, l'ensemble mobile se déplace par rapport à l'ensemble fixe avec des efforts résistants intempestifs qui sont dûs à des phénomènes de coincement, de serrage ou de jeu. Tous ces inconvénients sont liés à un mauvais guidage linéaire de l'ensemble mobile par rapport à l'ensemble fixe.

Le but de la présente invention est de proposer un dispositif de guidage linéaire, lors d'un choc, de l'ensemble mobile d'une colonne de direction de véhicule automobile par rapport à un ensemble fixe, afin d'éviter l'apparition d'efforts parasites qui perturberaient l'absorption d'énergie souhaitée.

De plus, le dispositif de guidage linéaire devra se monter facilement dans l'encombrement des colonnes de direction existantes.

Selon un mode de réalisation, l'invention se rapporte à un dispositif de guidage linéaire d'une colonne de direction de véhicule automobile, qui comprend un arbre de direction monté tournant dans un tube corps. Le tube-corps est relié à un ensemble support, qui est fixé au châssis du véhicule.

Le dispositif de guidage linéaire comporte un élément support fixe qui est solidaire du châssis du véhicule, et un élément support mobile qui est relié à l'élément support fixe afin de constituer l'ensemble support. L'élément support mobile est relié et bloqué sur l'élément support fixe à une valeur déterminée afin que ce blocage cesse en cas de choc.

Selon une caractéristique essentielle de l'invention, des éléments roulants sont disposés entre au moins un chemin de roulement fixe aménagé sur l'élément support fixe, et au moins un chemin de roulement mobile aménagé sur l'élément support mobile. Le chemin de roulement fixe et le chemin de roulement mobile sont aménagé chacun suivant la direction de guidage demandée.

Dans un type de réalisations de l'invention, le dispositif de guidage linéaire agit suivant une direction de guidage qui est relevée vers l'avant par rapport au plan horizontal, de manière qu'en cas de choc, le volant soit repoussé vers l'avant tout en étant remonté.

Dans un autre type de réalisations de l'invention, le dispositif de guidage linéaire agit suivant une direction de guidage qui est inclinée vers l'avant par rapport au plan horizontal, de manière qu'en cas de choc, le volant soit repoussé vers l'avant tout en étant abaissé.

Avantageusement, les éléments roulants sont des billes. De plus, les éléments roulants ont une cage de maintien, afin de garantir la position des éléments roulants les uns par rapport aux autres.

Selon certaines structures de l'invention, au moins un chemin de roulement fixe est agencé sur une glissière fixe, qui est un élément indépendant monté et fixé sur l'élément support fixe ; et au moins un chemin de roulement mobile est agencé sur une glissière mobile, qui est un élément indépendant monté et fixé sur l'élément support mobile.

Selon d'autres structures de l'invention, au moins un chemin de roulement fixe est agencé directement sur l'élément support fixe, et fait partie intégrante de l'élément support fixe ; et au moins un chemin de roulement mobile est agencé directement sur l'élément support mobile, et fait partie intégrante de l'élément support mobile.

Dans une réalisation particulièrement intéressante du dispositif de guidage linéaire suivant l'invention, l'élément support fixe comporte sur chacun de ses montants une glissière fixe, qui est disposée dans un logement du montant correspondant. Sur chaque glissière fixe est agencé un chemin de roulement fixe correspondant.

L'élément support mobile comporte sur chacune de ses portions latérales une glissière mobile. Chaque glissière mobile a une extrémité qui est munie d'un tenon. Chaque tenon vient s'engager dans une encoche aménagée dans la portion latérale correspondante. Chaque tenon se prolonge par une languette sensiblement parallèle à ladite glissière mobile, de manière à venir contre la face interne de la portion latérale correspondante. L'autre extrémité de chaque glissière mobile a un trou de passage, qui fait face à un autre trou de passage aménagé dans la portion latérale correspondante, pour recevoir un moyen de fixation de ladite glissière mobile sur la portion latérale correspondante.

Dans chaque glissière mobile est agencé un chemin de roulement mobile correspondant. Des billes sont disposées entre chacun des chemins de roulement fixes et chacun des chemins de roulement mobiles correspondants.

Avantageusement, selon l'invention les axes de chemins de roulements fixes peuvent être inclinés d'un certain angle par rapport à leur axe.

Dans une autre structure, les axes des chemins de roulements mobiles peuvent être inclinés d'un certain angle par rapport à leur axe.

Dans une autre réalisation, les axes des chemins de roulements fixes peuvent être inclinés d'un certain angle par rapport à leur axe et les axes des chemins de roulements mobiles peuvent être inclinés d'un certain angle par rapport à leur axe.

Le dispositif de guidage linéaire selon l'invention présente ainsi l'avantage d'avoir une structure extrêmement simple à réaliser, autorisant la possibilité d'une très bonne qualité de fabrication lorsqu'elle est réalisée en très grande série, comme cela est le cas dans l'industrie automobile. Cette simplicité de fabrication permet d'avoir également un coût très réduit. Le dispositif de guidage linéaire suivant l'invention offre enfin l'avantage déterminant d'éviter l'apparition d'efforts parasites qui perturberaient l'absorption d'énergie souhaitée. Ainsi, le dispositif de guidage linéaire permet d'obtenir une absorption d'énergie qui correspond à celle demandée. De plus, le dispositif s'adapte facilement dans l'encombrement des colonnes de direction existantes.

D'autres caractéristiques et avantages de la présente invention apparaîtront plus clairement à la lecture de la description suivante de plusieurs réalisations préférées de l'invention en référence aux dessins annexés correspondants dans lesquels :
- la figure 1 est une vue de dessus en perspective d'une colonne de direction de véhicule automobile, qui est munie d'un dispositif de guidage linéaire selon l'invention ;
- la figure 2 est une vue analogue à la figure 1 et dans laquelle l'élément support fixe n'a pas été représenté ;
- la figure 3 est une vue de dessous en perspective de l'élément support fixe selon l'invention représenté en figure 1 ;
- la figure 4 est une vue en perspective correspondant à la figure 1, des différents éléments du mode de réalisation du guidage linéaire de la figure 1 ;
- la figure 5 est une coupe axiale partielle suivant le plan V-V de le figure 4 ;
- la figure 6 est une vue latérale de l'ensemble correspondant à la figure 1, avec une certaine inclinaison du guidage par rapport au plan horizontal ; et
- la figure 7 est une vue latérale de l'ensemble correspondant à la figure 1, avec une autre inclinaison du guidage par rapport au plan horizontal.

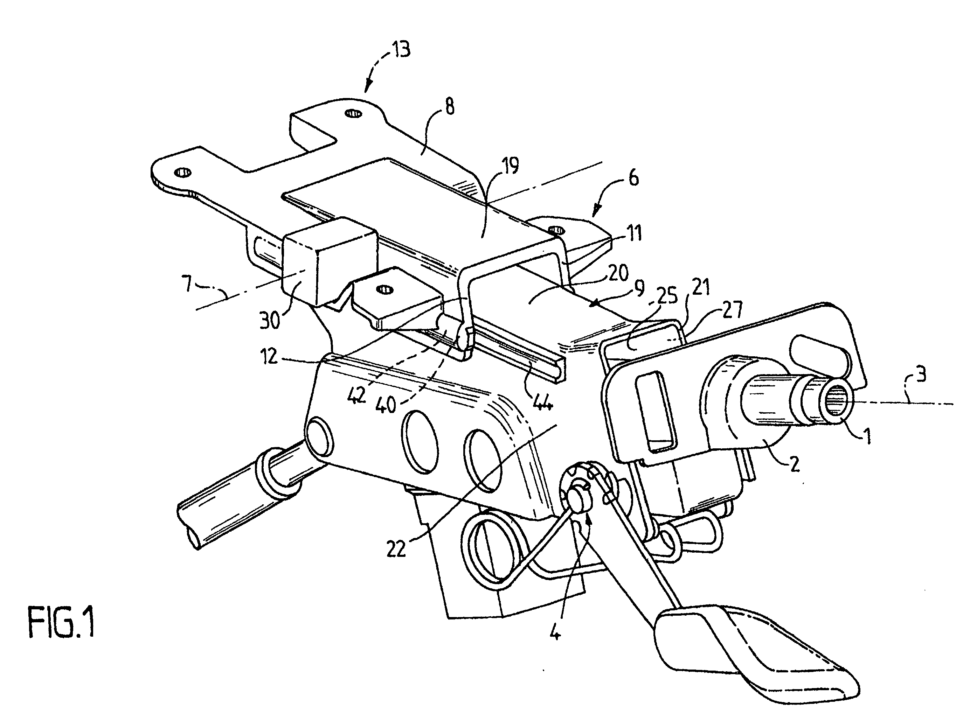

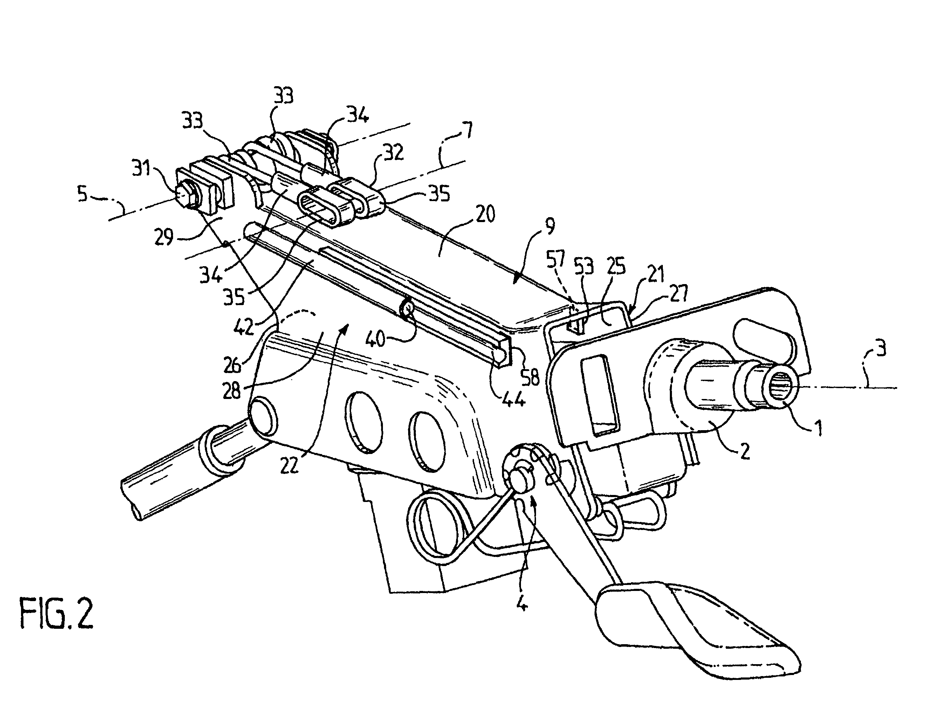

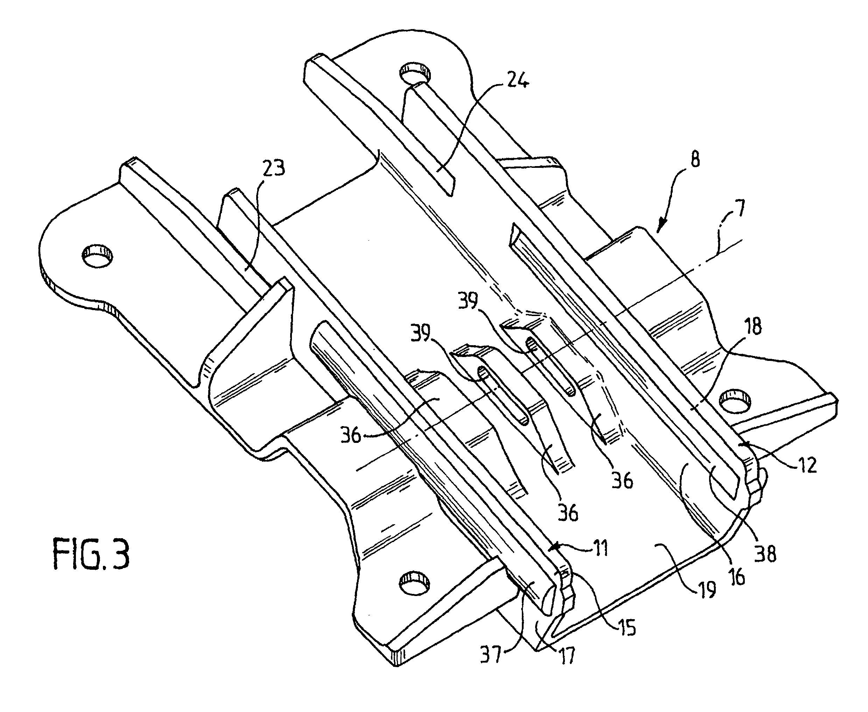

Comme on peut le voir sur les figures 1, 2 et 3, la colonne de direction de véhicule automobile comprend un arbre de direction 1, qui est monté tournant dans un tube-corps 2 autour d'un axe de direction 3. Le tube-corps 2 est relié à un ensemble support 6 par un système de réglage en position 4 en profondeur ou en inclinaison, ou par un système de réglage 4 en profondeur et en inclinaison. L'invention peut s'appliquer également à une colonne de direction non réglable, dans ce cas le tube-corps 2 est relié directement à l'ensemble support 6.

L'ensemble support 6 comprend un élément support fixe 8 et un élément support mobile 9. L'élément support fixe 8 est solidaire du châssis 13 du véhicule ou d'un élément de carrosserie non représenté sur la figure 1. L'élément support mobile 9 est relié au tube-corps 2 par le système de réglage en position 4. L'élément support mobile 9 est relié à l'élément support fixe 8, et ledit élément support mobile 9 est bloqué sur ledit élément support fixe 8, à une valeur déterminée, qui teint compte du choc à absorber afin de permettre dans ce cas à l'élément support mobile 9 de coulisser dans l'élément support fixe 8.

L'élément support fixe 8 comporte une embase 19 avec deux montants 11 et 12 sensiblement verticaux qui sont montés sur cette embase 19. Les montants 11 et 12 sont sensiblement parallèles à l'axe de direction 3, et plus particulièrement sensiblement parallèles au plan vertical passant par l'axe de direction 3.

L'élément support mobile 9 comporte deux portions latérales 21 et 22 sensiblement verticales et une portion de raccordement 20 sensiblement horizontale. L'élément support mobile 9 vient s'engager entre les deux montants 11 et 12 de l'élément support fixe 8 par l'intermédiaire de ses deux portions latérales 21 et 22, qui sont sensiblement parallèles à l'axe de direction 3, et plus particulièrement sensiblement parallèles au plan vertical passant par l'axe de direction 3.

Chacune des portions latérales 21 et 22 a, à sa partie inférieure, un trou de passage de l'axe des systèmes de réglage 4.

Dans la suite de la description et pour un même élément, on appellera interne par rapport à l'axe de direction 3, ce qui est le plus près de cet axe de direction 3, et externe ce qui est le plus éloigné.

Ainsi le montant 11 de l'élément support fixe 8 a une face interne 15 et une face externe 17 par rapport à l'axe de direction 3. De même, le montant 12 a une face interne 16, et une face externe 18 par rapport à ce même axe de direction 3.

De la même façon pour l'élément support mobile 9, la portion latérale 21 a une face interne 25 et une face externe 27, et la portion latérale 22 a une face interne 26 et une face externe 28.

Comme on peut le voir sur les figures 1, 2 et 3, le dispositif d'absorption d'énergie est modulable et comporte :
- un axe de tenue 5,
- un axe d'accrochage 7, et
- plusieurs enroulements 33, qui dans le cas des figures sont au nombre de 2.

L'axe de tenue 5 est sensiblement perpendiculaire à l'axe de direction 3 de la colonne, et il est disposé dans l'élément support mobile 9. L'axe d'accrochage 7 est sensiblement perpendiculaire à l'axe de direction 3 de la colonne, et il est disposé dans l'élément support fixe 8. Les enroulements 33 sont obtenus à partir d'un élément métallique de section déterminée, qui peut être par exemple ronde, rectangulaire ou carrée. Les enroulements 33 sont montés sur un rouleau qui est disposé sur l'axe de tenue 5 solidaire de l'élément support mobile 9, et disposé à son extrémité 29.

Les enroulements 33 ont chacun respectivement une extrémité libre référencée 35 qui s'amarre à l'axe d'accrochage 7 qui est disposé sur l'élément support fixe 8. L'extrémité correspondante 29 de l'élément support mobile 9 est située du côté du boîtier de direction, c'est-à-dire du côté opposé au volant de direction.

L'axe d'accrochage 7 des enroulements 33 est constitué par une tige de maintien 32 qui est mobile suivant son axe. Ce mouvement est obtenu par l'intermédiaire d'un actionneur 30 qui est mis en action par des moyens de commande. De cette manière, il est possible de relier l'axe d'accrochage 7 à l'axe de tenue 5 par un nombre voulu d'enroulements qui est déterminé suivant les caractéristiques du conducteur et notamment suivant son poids. Ainsi, en cas de choc, l'élément support 9 qui est relié au tube-corps 2 donc au volant, tire l'extrémité libre des enroulements, qui est amarrée à l'axe d'accrochage 7, de façon à dérouler le ou les enroulements en absorbant l'énergie à dissiper demandée.

Les deux enroulements 33 sont montés sur un rouleau. Ce rouleau est disposé sur un manchon autour de l'axe de tenue 5. Chaque enroulement 33 est muni d'une portion rectiligne référencée 34 qui a sensiblement la même direction que l'effort à amortir. Chaque portion rectiligne 34 se prolonge par une extrémité libre référencée 35, qui entoure la tige de maintien 32.

L'axe de tenue 5 est constitué par une tige de maintien 31 qui traverse l'élément support mobile 9. La tige de maintien 31 porte un manchon qui est disposé entre les deux faces internes respectives 25 et 26 des deux portions latérales 21 et 22 de l'élément support mobile 9. La tige de maintien 31 est maintenue à chacune de ses deux extrémités par un ensemble de fixation qui se monte sur les portions latérales 21 et 22 de l'élément support mobile 9.

L'axe d'accrochage 7 est matérialisé par la tige de maintien 32 qui est montée dans des trous de passage 39. Ces trous de passage sont aménagée dans des oreilles 36 de l'élément support fixe 8.

Chacun des montants 11 et 12 de l'élément support fixe 8 est muni d'un trou oblong débouchant respectif 23 et 24 de passage de l'axe de tenue 5 des enroulements 33, c'est-à-dire de passage de la tige de maintien 31.

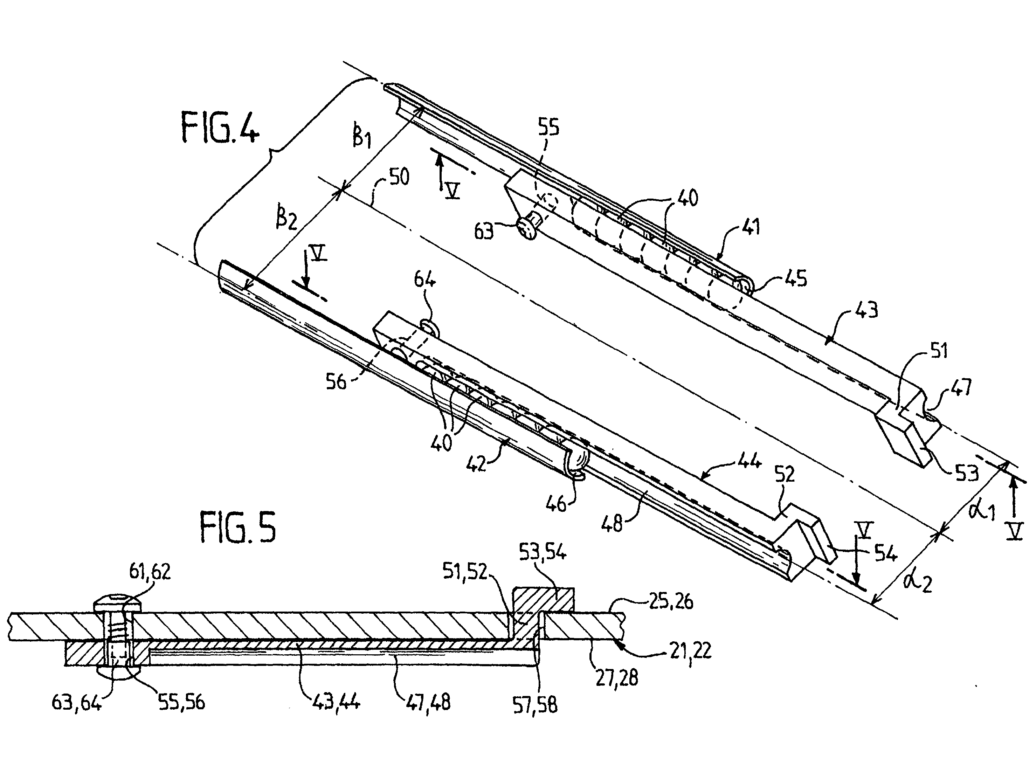

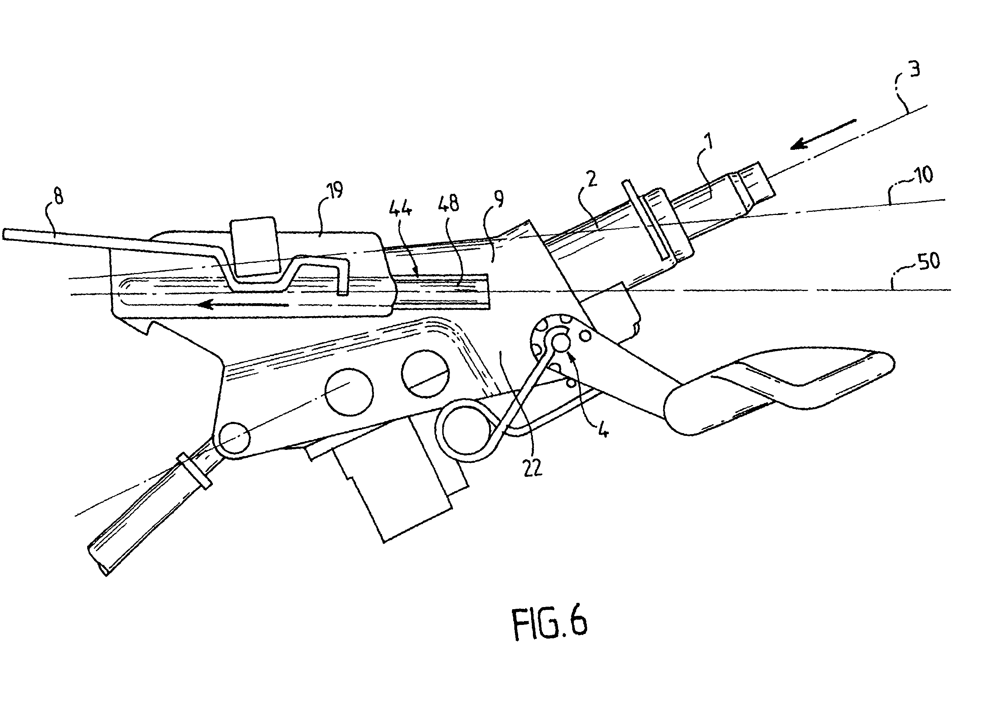

Comme on peut le voir également sur les figures 4 et 5, l'élément support fixe 8 comporte sur chacun de ses montants 11 et 12 une glissière fixe 41 et 42 qui est disposée dans un logement 37 et 38 du montant correspondant 11 et 12.

Dans chaque glissière fixe 41 et 42, il est agencé un chemin de roulement fixe 45 et 46 correspondant.

L'élément support mobile 9 comporte sur chacune de ses portions latérales 21 et 22 une glissière mobile 43 et 44 dont une extrémité est munie d'un tenon 51 et 52 qui vient s'engager dans une encoche 57 et 58 aménagée dans la portion latérale correspondante 21 et 22. Chaque tenon 51 et 52 se prolonge par une languette 53 et 54 sensiblement parallèle à ladite glissière mobile 43 et 44, de manière à venir contre la face interne 25 et 26 de la portion latérale correspondante 21 et 22.

L'autre extrémité de ladite glissière mobile 43 et 44 a un trou de passage 55 et 56 qui fait face à un autre trou de passage 61 et 62 aménagé dans la portion latérale correspondante 21 et 22, pour recevoir un moyen de fixation 63 et 64 de ladite glissière mobile 43 et 44 sur la portion latérale correspondante 21 et 22.

Dans chaque glissière mobile 43 et 44, il est agencé un chemin de roulement mobile 47 et 48 correspondant.

Des éléments roulants qui sont constitués par des billes 40 sont disposés entre le chemin de roulement fixe 45 et 46 et le chemin de roulement mobile 47 et 48.

Selon une variante de réalisation non représentée, les éléments roulants 40 ont une cage de maintien, afin de garantir la position des éléments roulants les uns par rapport aux autres.

Ainsi selon l'invention, des éléments roulants, qui peuvent être des billes 40, sont disposés entre au moins un chemin de roulement fixe 45, 46 aménagé sur l'élément support fixe 8, et au moins un chemin de roulement mobile 47, 48 aménagé sur l'élément support mobile 9. Le chemin de roulement fixe 45 et 46 et le chemin de roulement mobile 47 et 48 sont aménagés chacun suivant la direction de guidage demandée.

Dans un type de réalisations de l'invention représenté sur la figure 6, le dispositif de guidage linéaire, qui comprend des chemins de roulements 45, 46, 47, 48, agit suivant une direction de guidage représenté par l'axe 50 qui est relevé vers l'avant par rapport au plan horizontal 10, de manière qu'en cas de choc, le volant soit repoussé vers l'avant tout en étant remonté.

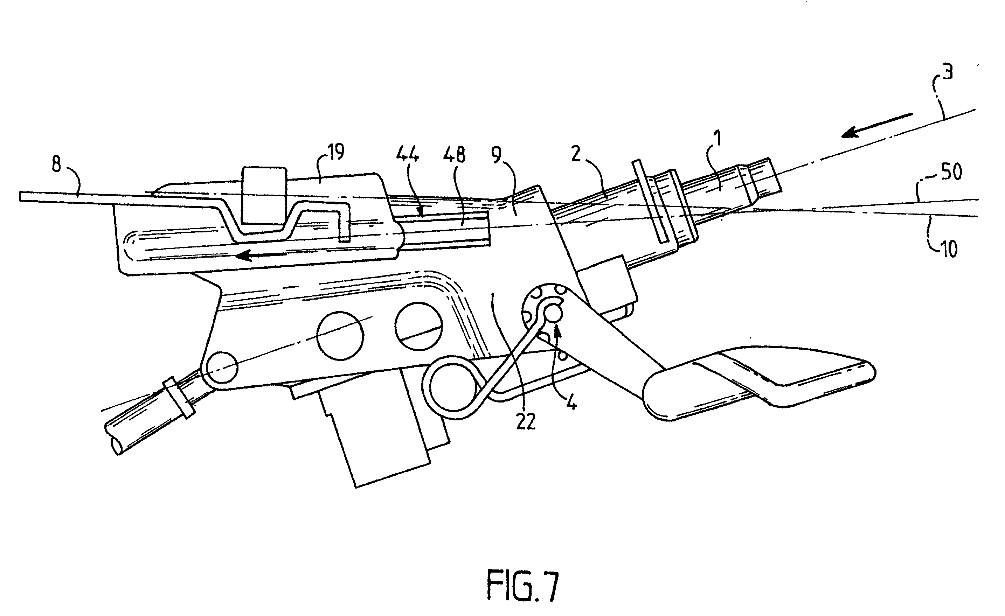

Dans un autre type de réalisations de l'invention représenté sur la figure 7, le dispositif de guidage linéaire, qui comprend des chemins de roulements 45, 46, 47, 48, agit suivant une direction de guidage représenté par l'axe 50 qui est incliné vers l'avant par rapport au plan horizontal 10, de manière qu'en cas de choc, le volant soit repoussé vers l'avant tout en étant abaissé.

Selon certaines structures de l'invention, au moins un chemin de roulement fixe 45 et 46 est agencé sur une glissière fixe 41 et 42, qui est un élément indépendant monté et fixé sur l'élément support fixe 8, et au moins un chemin de roulement mobile 47 et 48 est agencé sur une glissière mobile 43 et 44 qui est un élément indépendant monté et fixé sur l'élément support mobile 9.

Selon d'autres structures de l'invention, au moins un chemin de roulement fixe 45 et 46 est agencé directement sur l'élément support fixe 8, et fait partie intégrante de l'élément support fixe 8, et au moins un chemin de roulement mobile 47 et 48 est agencé directement sur l'élément support mobile 9, et fait partie intégrante de l'élément support mobile 9.

Selon une réalisation de l'invention représentée sur la figure 4, les axes des chemins de roulements fixes 45 et 46 sont inclinés respectivement d'un angle β1 et β2 par rapport à l'axe 50, qui représente la direction de guidage.

Dans une autre réalisation de l'invention représentée sur la figure 4, les axes des chemins de roulements mobiles 47 et 48 sont inclinés respectivement d'un angle α1 et α2 par rapport à l'axe 50, qui représente la direction de guidage.

Dans un autre mode de réalisation, les axes des chemins de roulements fixes 45 et 46 sont inclinés respectivement d'un angle β1 et β2 par rapport à l'axe 50 et les axes des chemins de roulements mobiles 47 et 48 sont inclinés respectivement d'un angle α1 et α2 par rapport à l'axe 50, qui représente la direction de guidage.

## Revendications

1. Dispositif de guidage linéaire d'une colonne de direction de véhicule automobile, qui comprend un arbre de direction (1) monté tournant dans un tube corps (2), ledit tube-corps (2) est relié à un ensemble support (6) qui est fixé au châssis (10) du véhicule, ledit dispositif de guidage linéaire consiste en :
- un élément support fixe (8) qui est solidaire du châssis (13) du véhicule, et un élément support mobile (9) qui est relié à l'élément support fixe (8) afin de constituer l'ensemble support (6), l'élément support mobile (9) est relié et bloqué sur l'élément support fixe (8) à une valeur déterminée afin que ce blocage cesse en cas de choc ; **caractérisé en ce que** ledit dispositif de guitage linéaire comprend de plus
- des éléments roulants (40) qui sont disposés entre au moins un chemin de roulement fixe (45, 46) aménagé sur l'élément support fixe (8), et au moins un chemin de roulement mobile (47, 48) aménagé sur l'élément support mobile (9), le chemin de roulement fixe (45, 46) et le chemin de roulement mobile (47, 48) étant aménagé chacun suivant la direction de guidage demandée.

2. Dispositif de guidage linéaire suivant la revendication 1, **caractérisé en ce que** ledit dispositif de guidage linéaire agit suivant une direction de guidage qui est relevée vers l'avant par rapport au plan horizontal (10), de manière qu'en cas de choc, le volant soit repoussé vers l'avant tout en étant remonté.

3. Dispositif de guidage linéaire suivant la revendication 1, **caractérisé en ce que** ledit dispositif de guidage linéaire agit suivant une direction de guidage qui est inclinée vers l'avant par rapport au plan horizontal (10), de manière qu'en cas de choc, le volant soit repoussé vers l'avant tout en étant abaissé.

4. Dispositif de guidage linéaire suivant l'une quelconque des revendications précédentes, **caractérisé en ce que** les éléments roulants sont des billes (40).

5. Dispositif de guidage linéaire suivant l'une quelconque des revendications précédentes, **caractérisé en ce que** au moins un chemin de roulement fixe (45, 46) est agencé sur une glissière fixe (41, 42) qui est un élément indépendant monté et fixé sur l'élément support fixe (8).

6. Dispositif de guidage linéaire suivant l'une quelconque des revendications 1 à 4, **caractérisé en ce que** au moins un chemin de roulement mobile (47, 48) est agencé sur une glissière mobile (43, 44) qui est un élément indépendant monté et fixé sur l'élément support mobile (9).

7. Dispositif de guidage linéaire suivant l'une quelconque des revendications 1 à 4, **caractérisé en ce que** au moins un chemin de roulement fixe (45, 46) est agencé directement sur l'élément support fixe (8), et fait partie intégrante de l'élément support fixe (8).

8. Dispositif de guidage linéaire suivant l'une quelconque des revendications 1 à 4, **caractérisé en ce que** au moins un chemin de roulement mobile (47, 48) est agencé directement sur l'élément support mobile (9), et fait partie intégrante de l'élément support mobile (9).

9. Dispositif de guidage linéaire suivant l'une quelconque des revendications 1 à 4, **caractérisé en ce que** :
- l'élément support fixe (8) comporte sur chacun de ses montants (11, 12) une glissière fixe (41, 42) qui est disposée dans un logement (37, 38) du montant correspondant (11, 12) ;
- dans chaque glissière fixe (41, 42) est agencé un chemin de roulement fixe (45, 46) correspondant ;
- l'élément support mobile (9) comporte sur chacune de ses portions latérales (21, 22) une glissière mobile (43, 44) dont une extrémité est munie d'un tenon (51, 52) qui vient s'engager dans une encoche (57, 58) aménagée dans la portion latérale correspondante (21, 22), ledit tenon (51, 52) se prolongeant par une languette (53, 54) sensiblement parallèle à ladite glissière mobile (43, 44), de manière à venir contre la face interne (25, 27) de la portion latérale correspondante (21, 22), l'autre extrémité de ladite glissière mobile (43, 44) ayant un trou de passage (55, 56) qui fait face à un autre trou de passage (61, 62) aménagé dans la portion latérale correspondante (21, 22), pour recevoir un moyen de fixation (63, 64) de ladite glissière mobile (43, 44) sur la portion latérale correspondante (21, 22) ;
- dans chaque glissière mobile (43, 44) est agencé un chemin de roulement mobile (47, 48) correspondant ;
- des billes (40) étant disposées entre le chemin de roulement fixe (45, 46) et le chemin de roulement mobile (47, 48).

10. Dispositif de guidage linéaire suivant l'une quelconque des revendications précédentes, **caractérisé en ce que** les éléments roulants (40) ont une cage de maintien, afin de garantir la position des éléments roulants les uns par rapport aux autres.

11. Dispositif de guidage linéaire suivant l'une quelconque des revendications précédentes, **caractérisé en ce que** les axes des chemins de roulements fixes (45 et 46) sont inclinés d'un certain angle par rapport à l'axe (50), qui représente la direction de guidage.

12. Dispositif de guidage linéaire suivant l'une quelconque des revendications 1 à 10, **caractérisé en ce que** les axes des chemins de roulements mobiles (47 et 48) sont inclinés d'un certain angle par rapport à l'axe (50), qui représente la direction de guidage.

13. Dispositif de guidage linéaire suivant l'une quelconque des revendications 1 à 10, **caractérisé en ce que** les axes des chemins de roulements fixes (45 et 46) sont inclinés d'un certain angle par rapport à l'axe (50), qui représente la direction de guidage, et **en ce que** les axes des chemins de roulements mobiles (47 et 48) sont inclinés d'un certain angle par rapport à l'axe (50), qui représente la direction de guidage.

## Patentansprüche

1. Vorrichtung zur linearen Führung einer Lenksäule eines Kraftfahrzeugs, die eine sich in einem Rohrkörper (2) drehend angebrachte Lenksäule (1) umfaßt, der Rohrkörper (2) ist mit einem Trägeraufbau (6) verbunden, der an der Karosserie (10) des Fahrzeugs befestigt ist, die lineare Führungsvorrichtung besteht aus:
- einem festen Trägerelement (8), das fest mit der Karosserie (13) des Fahrzeugs verbunden ist, und einem beweglichen Trägerelement (9), das mit dem festen Trägerelement (8) verbunden ist, um den Trägeraufbau (6) zu bilden, das bewegliche Trägerelement (9) ist verbunden und arretiert auf dem festen Trägerelement (8) bis zu einem vorbestimmten Wert, damit diese Arretierung im Fall eines Aufpralls aufhört;
**dadurch gekennzeichnet, daß** die lineare Führungvorrichtung außerdem umfaßt
- Rollelemente (40), die zwischen wenigstens einer festen Laufbahn (45, 46), die auf dem festen Trägerelement (8) angeordnet ist, und wenigstens einer beweglichen Laufbahn (47, 48) angeordnet sind, die auf dem beweglichen Trägerelement (9) angeordnet ist, wobei die feste Laufbahn (45, 46) und die bewegliche Laufbahn (47, 48) jeweils gemäß der geforderten Führungsrichtung angeordnet sind.

2. Lineare Führungsvorrichtung nach Anspruch 1, **dadurch gekennzeichnet, daß** die lineare Führungsvorrichtung gemäß einer Führungsrichtung wirksam ist, die in bezug auf die horizontale Ebene (10) angehoben ist, derart, daß im Fall eines Aufpralls das Lenkrad nach vorne zurückgestoßen wird, wobei es hochgehoben wird.

3. Lineare Führungsvorrichtung nach Anspruch 1, **dadurch gekennzeichnet, daß** die lineare Führungsvorrichtung gemäß einer Führungsrichtung wirksam ist, die in bezug auf die horizontale Ebene (10) nach vorne geneigt ist, derart, daß im Falle eines Aufpralls das Lenkrad nach vorne zurückgestoßen wird, wobei es abgesenkt wird.

4. Lineare Führungsvorrichtung nach einem beliebigen der vorhergehenden Ansprüche, **dadurch gekennzeichnet, daß** die Rollelemente Kugeln (40) sind.

5. Lineare Führungsvorrichtung nach einem beliebigen der vorhergehenden Ansprüche, **dadurch gekennzeichnet, daß** wenigstens eine feste Laufbahn (45, 46) auf einer festen Gleitbahn (41, 42) angeordnet ist, die ein unabhängiges, an dem festen Trägerelement (8) angebrachtes und befestigtes Element ist.

6. Lineare Führungsvorrichtung nach einem beliebigen der Ansprüche 1 bis 4, **dadurch gekennzeichnet, daß** wenigstens eine bewegliche Laufbahn (47, 48) auf einer beweglichen Gleitbahn (43, 44) angeordnet ist, die ein unabhängiges, auf dem beweglichen Trägerelement (9) angebrachtes und befestigtes Element ist.

7. Lineare Führungsvorrichtung nach einem beliebigen der Ansprüche 1 bis 4, **dadurch gekennzeichnet, daß** wenigstens eine feste Laufbahn (45, 46) direkt auf dem festen Trägerelement (8) angeordnet ist und einen Grundbestandteil des festen Trägerelements (8) bildet.

8. Lineare Führungsvorrichtung nach einem beliebigen der Ansprüche 1 bis 4, **dadurch gekennzeichnet, daß** wenigstens eine bewegliche Laufbahn (47, 48) direkt auf dem beweglichen Trägerelement (9) angeordnet ist und einen Grundbestandteil des beweglichen Trägerelements (9) bildet.

9. Lineare Führungsvorrichtung nach einem beliebigen der Ansprüche 1 bis 4, **dadurch gekennzeichnet, daß**:
- das feste Trägerelement (8) an jedem seiner Stützschenkel (11, 12) eine feste Gleitbahn (41, 42) umfaßt, die in einer Aufnahme (37, 38) des entsprechenden Stützschenkels (11, 12) angeordnet ist,
- in jeder festen Gleitbahn (41, 42) eine entsprechende feste Laufbahn (45, 46) angeordnet ist;
- das bewegliche Trägerelement (9) auf jedem seiner Seitenabschnitte (21, 22) eine bewegliche Gleitbahn (43, 44) umfaßt, deren eines Ende mit einem Zapfen (51, 52) versehen ist, der in einer Aussparung (57, 58) in Eingriff gelangt, die in dem entsprechenden Seitenabschnitt (21, 22) angeordet ist, wobei der Zapfen (51, 52) durch eine Leiste (43, 44) im wesentlichen parallel zur beweglichen Gleitbahn (43, 44) verlängert ist derart, daß er gegen-die Innenseite (25, 27) des entsprechenden Seitenabschnittes (21, 22) gelangt, wobei das andere Ende der beweglichen Gleitbahn (43, 44) ein Durchgangsloch (55, 56) aufweist, das einem in dem entsprechenden Seitenabschnitt (21, 22) angeordneten weiteren Durchgangsloch (61, 62) gegenüberliegt, um ein Befestigungsmittel (63, 64) der anderen beweglichen Gleitbahn (43, 44) auf dem entsprechenden Seitenabschnitt (21, 22) aufzunehmen,
- in jeder beweglichen Gleitbahn (43, 44) eine entsprechende bewegliche Laufbahn (47, 48) angeordnet ist,
- wobei Kugeln (40) zwischen der festen Laufbahn (45, 46) und der beweglichen Laufbahn (47, 48) angeordnet sind.

10. Lineare Führungsvorrichtung nach einem beliebigen der vorhergehenden Ansprüche, **dadurch gekennzeichnet, daß** die Rollelemente (40) ein Haltegehäuse aufweisen, um die Position der Rollelemente zueinander zu garantieren.

11. Lineare Führungsvorrichtung nach einem beliebigen der vorhergehenden Ansprüche, **dadurch gekennzeichnet, daß** die Achsen der festen Laufbahnen (45 und 46) um einen bestimmten Winkel in bezug auf die Achse (50) geneigt sind, die die Führungsrichtung darstellt.

12. Lineare Führungsvorrichtung nach einem beliebigen der Ansprüche 1 bis 10, **dadurch gekennzeichnet, daß** die Achsen der beweglichen Laufbahnen (47 und 48) um einen bestimmten Winkel in bezug auf die Achse (50) geneigt sind, die die Führungsrichtung darstellt.

13. Lineare Führungsvorrichtung nach einem beliebigen der Ansprüche 1 bis 10, **dadurch gekennzeichnet, daß** die Achsen der festen Laufbahnen (45 und 46) um einen bestimmten Winkel in bezug auf die Achse (50) geneigt sind, die die Führungsrichtung darstellt, und daß die Achsen der beweglichen Laufbahnen (47 und 48) um einen bestimmten Winkel in bezug auf die Achse (50) geneigt sind, die die Führungsrichtung darstellt.

## Claims

1. Linear guide device for an automobile vehicle steering column, which device comprises a steering shaft (1) rotatably mounted in a body-tube (2), said body-tube is connected to a support assembly (6) which is fixed to a chassis (10) of the vehicle, said linear guide device includes:
- a fixed support member (8) which is fastened to the chassis (13) of the vehicle, and a mobile support member (9) which is connected to the fixed support member (8) in order to constitute the support assembly (6), the mobile support member (9) is connected and immobilized to the fixed support member (8) against forces up to particular value such that it is no longer immobilized in the event of an impact; **characterized in that** said linear guide device further comprises
- rolling members (40) which are disposed between a fixed rollway (45, 46) formed on the fixed support member (8), and at least a mobile rollway (47, 48) formed on the mobile support member (9), the fixed rollway (45, 46) and the mobile rollway (47, 48) each lying in the required guidance direction.

2. Linear guide device according to claim 1, **characterized in that** said linear guide device operates in a guidance direction that is raised toward the front relative to a horizontal plane (10), so that in the event of an impact the steering wheel is raised and pushed forward.

3. Linear guide device according to claim 1, **characterized in that** said linear guide device operates in a guidance direction that is inclined toward the front relative to a horizontal plane (10), so that in the event of an impact the steering wheel is lowered and pushed forward.

4. Linear guide device according to any one of the preceeding claims, **characterized in that** the rolling members are balls (40).

5. Linear guide device according to any one of the preceeding claims, **characterized in that** at least a fixed rollway (45, 46) is disposed on a fixed slide (41, 42) which is an independent member mounted on and fixed to the fixed support member (8).

6. Linear guide device according to any one of claims 1 to 4, **characterized in that** at least a mobile rollway (47, 48) is disposed on a mobile slide (43, 44) which is an independent member mounted on and fixed to the mobile support member (9).

7. Linear guide device according to any one of claims 1 to 4, **characterized in that** at least a fixed rollway (45, 46) is disposed directly on the fixed support member (8), and constitutes an integral part of the fixed support member (8).

8. Linear guide device according to any one of claims 1 to 4, **characterized in that** at least a mobile rollway (47, 48) is disposed directly on the mobile support member (9), and constitutes an integral part of the mobile support member (9).

9. Linear guide device according to any one of claims 1 to 4, **characterized in that**:
- the fixed support member (8) has on each of its uprights (11, 12) a fixed slide (41, 42) which is disposed in a housing (37, 38);
- a corresponding fixed rollway (45, 46) is disposed in each fixed slide (41, 42);
- the mobile support member (9) has a mobile slide (43, 44) on each of its lateral portions (21, 22), one end of which has a tenon (51, 52) which engages in a notch (57, 58) formed in the corresponding lateral portion (21, 22), said tenon (51, 52) being extended by a tongue (53, 54) substantially parallel to said mobile slide (43, 44), so as to laterally engage with an inner face (25, 27) of the corresponding lateral portion (21, 22), the other end of said mobile side (43, 44) having a hole (55, 56) through it facing another hole (61, 62) through the corresponding lateral portion (21, 22), to receive means (63, 64) for fixing said mobile slide (43, 44) to the corresponding lateral portion (21, 22);
- a corresponding mobile rollway (47, 48) is disposed in each mobile slide (43, 44);
- balls (40) being disposed between the fixed rollway (45, 46) and the mobile rollway (47, 48).

10. Linear guide device according to any one of the preceeding claims, **characterized in that** the roller members (40) have a retaining cage to guarantee the position of the rolling members relative to each other.

11. Linear guide device according to any one of the preceeding claims, **characterized in that** the axes of the fixed rollways (45 and 46) are inclined at an angle to the axis (50) which represents the guide direction.

12. Linear guide device according to any one of claims 1 to 10, **characterized in that** the axes of the mobile rollways (47 and 48) are inclined at an angle to the axis (50) which represents the guide direction.

13. Linear guide device according to any one of claims 1 to 10, **characterized in that** the axes of the fixed rollways (45 and 46) are inclined to the axis (50), which represents the guide direction, and **in that** the axes of the mobile rollways (47 and 48) are inclined to the axis (50) which represents the guide direction.
